# EUROPEAN PATENT APPLICATION

(11) **EP 4 753 233 A1**
(43) Date of publication of application: **03.06.2026**
(21) Application number: 23950001.0
(22) Date of filing: 25.08.2023
(51) Int. Cl.: H04L 67/12

(54) **DATA FORWARDING METHOD, CHIP, AND ELECTRONIC DEVICE**

(71) Applicant: Shenzhen Goodix Technology Co., Ltd., Shenzhen, Guangdong 518045 (CN)
(72) Inventor: WANG, Jihui, Shenzhen, Guangdong 518045 (CN); YU, Xinhua, Shenzhen, Guangdong 518045 (CN); YIN, Ting, Shenzhen, Guangdong 518045 (CN); YAN, Ke, Shenzhen, Guangdong 518045 (CN); DAI, Xuewei, Shenzhen, Guangdong 518045 (CN); LI, Jian, Shenzhen, Guangdong 518045 (CN)
(74) Representative: Kraus & Lederer PartGmbB
(86) International application number: PCT/CN2023/115046
(87) International publication number: WO 2025/043406

(57) **Abstract**

The present disclosure provides a data forwarding method, a physical layer chip, and an electronic device, which can implement high-speed, high-bandwidth, high-precision, and low-delay data transmission, wherein the data forwarding method is used for a physical layer device of sub-node in a transmission network, wherein the network comprises a head node and a plurality of sub-nodes, the head node and the plurality of sub-nodes are connected via a physical transmission medium, and the sub-node further comprises a transmission processing device, receiving, via a first branch of the physical layer device, a first downlink signal transmitted by the head node or a preceding adjacent sub-node among the plurality of sub-nodes through the physical transmission medium; enabling, via the first branch, a second branch of the physical layer device to obtain the first downlink signal through a forwarding module of the physical layer device; and sending, via the second branch, the first downlink signal to a succeeding adjacent sub-node among the plurality of sub-nodes through the physical transmission medium.

## Description

### TECHNICAL FIELD

The present disclosure relates to the field of Ethernet communication, and more specifically relates to a data forwarding method, a chip, and an electronic device.

### BACKGROUND

Nowadays, vehicle devices and functions thereof tend to be diversified. A vehicle may comprise a master control device and a plurality of slave devices, with data transmission and interaction among the master control device and the plurality of slave devices. For example, in a vehicle audio data transmission scenario, a vehicle comprises an audio master control unit and a plurality of speakers, wherein the vehicle speakers can realize, e.g., an entertainment function of music play, a call function of making or answering a call, or a voice control function of speech recognition. The number of vehicle speakers is also gradually increasing. Speaker audio data transmission can be implemented through the physical layer by harmonizing the plurality of vehicle speakers to achieve high-quality user experience.

However, how to improve data transmission rate in the physical layer, and implement shorter transmission delay and higher precision data has become a to-be-solved problem.

### SUMMARY

The present disclosure provides a data forwarding method, a chip, and an electronic device, which can increase the data transmission rate, and implement data transmission with a shorter delay and a higher precision.

In a first aspect, a data forwarding method is provided for a physical layer device of sub-nodes in a transmission network, wherein the network comprises a head node and a plurality of sub-nodes, the head node and the plurality of sub-nodes are connected via a physical transmission medium, and the sub-node further comprises a transmission processing device, receiving, via a first branch of the physical layer device, a first downlink signal transmitted by the head node or a preceding adjacent sub-node among the plurality of sub-nodes through the physical transmission medium; enabling, via the first branch, a second branch of the physical layer device to obtain the first downlink signal through a forwarding module of the physical layer device; and sending, via the second branch, the first downlink signal to a succeeding adjacent sub-node among the plurality of sub-nodes through the physical transmission medium.

In a possible implementation, the enabling, via the first branch, the second branch to obtain the first downlink signal through the forwarding module comprises: performing, via the first branch, signal processing on the first downlink signal to obtain a second downlink signal, forwarding, via the forwarding module, the second downlink signal to the second branch, receiving, via the second branch, the second downlink signal, and performing, via the second branch, signal processing on the second downlink signal to obtain the first downlink signal.

In a possible implementation, the method further comprises: receiving, via a third branch of the physical layer device, the second downlink signal through the forwarding module, processing the second downlink signal to obtain a third downlink signal, and then sending the third downlink signal to the transmission processing device through a first interface of the third branch.

In a possible implementation, the first branch comprises a first PCS module, the second branch comprises a second PCS module, the forwarding module connects the first PCS module to the second PCS module, the first PCS module is configured to descramble a signal, and the second PCS module is configured to scramble a signal.

In a possible implementation, the first branch comprises a first PMA module, the second branch comprises a second PMA module, the forwarding module connects the first PMA module to the second PMA module, the first PMA module is configured to demodulate a signal, and the second PMA module is configured to modulate a signal.

In a possible implementation, the first branch comprises a third PCS module, the second branch comprises a fourth PCS module, the forwarding module connects the third PCS module to the fourth PCS module, and the third PCS module and the fourth PCS module are configured to implement data adaptation.

In a possible implementation, the physical layer device further comprises a third branch and a fourth branch, the third branch comprises a first interface, the fourth branch comprises a second interface, the third branch and the fourth branch jointly receive the second downlink signal through the forwarding module and process the second downlink signal to obtain a fourth downlink signal and a fifth downlink signal respectively, the third branch sends the fourth downlink signal to the transmission processing device through the first interface, and the fourth branch sends the fifth downlink signal to the transmission processing device through the second interface.

In a possible implementation, the second branch receives a first uplink signal transmitted by the succeeding adjacent sub-node through the physical transmission medium; the second branch enables the first branch to obtain the first uplink signal through the forwarding module; and the first branch sends the first uplink signal to the preceding adjacent sub-node or the head node through the physical transmission medium.

In a possible implementation, the enabling, via the second branch, the first branch to obtain the first uplink signal through the forwarding module comprises: performing, via the second branch, signal processing on the first uplink signal to obtain a second uplink signal, forwarding, via the forwarding module, the second uplink signal to the first branch, receiving, via the first branch, the second uplink signal, and performing, via the first branch, signal processing on the second uplink signal to obtain the first uplink signal.

In a possible implementation, the physical layer device further comprises the third branch, the third branch comprises the first interface, the third branch receives a third uplink signal transmitted by the transmission processing device through the first interface and processes the third uplink signal to obtain a fourth uplink signal; the first branch receives the fourth uplink signal through the forwarding module and processes the fourth uplink signal to obtain a fifth uplink signal, and the first branch sends the fifth uplink signal to the preceding adjacent sub-node or the head node through the physical transmission medium.

In a possible implementation, the second branch comprises a second PCS module, the first branch comprises a first PCS module, the forwarding module connects the first PCS module to the second PCS module, the second PCS module is configured to descramble a signal, and the first PCS module is configured to scramble a signal.

In a possible implementation, the second branch comprises a second PMA module, the first branch comprises a first PMA module, the forwarding module connects the first PMA module to the second PMA module, the second PMA module is configured to demodulate a signal, and the first PMA module is configured to modulate a signal.

In a possible implementation, the second branch comprises a fourth PCS module, the first branch comprises a third PCS module, the forwarding module connects the third PCS module to the fourth PCS module, and the third PCS module and the fourth PCS module are configured to implement data adaptation.

In a second aspect, a physical layer chip is provided, comprising a processor and a memory, wherein the memory is configured to store a computer program, and the processor is configured to invoke and run the computer program stored in the memory, to implement the method according to the above first aspect.

In a third aspect, an electronic device is provided, comprising the physical layer chip according to the second aspect and a transmission processing device, wherein the transmission processing device is connected to the physical layer chip, for interaction with an external environment.

### BRIEF DESCRIPTION OF DRAWINGS

FIG. 1 is a first schematic structural diagram of a network provided in an embodiment of the present disclosure;
FIG. 2 is a second schematic structural diagram of a network provided in an embodiment of the present disclosure;
FIG. 3 is a schematic structural diagram of a sub-node;
FIG. 4 is a schematic structural diagram of a PHY device;
FIG. 5 is a first flowchart of a physical layer-based data forwarding method 200 applied to a PHY device provided in the present disclosure;
FIG. 6 is a second flowchart of a physical layer-based data forwarding method 200 applied to a PHY device provided in the present disclosure;
FIG. 7 is a first specific schematic structural diagram of a PHY device 300;
FIG. 8 is a second specific schematic structural diagram of a PHY device 300;
FIG. 9 is a third specific schematic structural diagram of a PHY device 300;
FIG. 10 is a third flowchart of a physical layer-based data forwarding method 200 applied to a PHY device provided in the present disclosure;
FIG. 11 is a first specific schematic structural diagram of a PHY device 400;
FIG. 12 is a second specific schematic structural diagram of a PHY device 400;
FIG. 13 is a third specific schematic structural diagram of a PHY device 400;
FIG. 14 is a first flowchart of a physical layer-based data forwarding method 500 applied to a PHY device provided in the present disclosure;
FIG. 15 is a second flowchart of a physical layer-based data forwarding method 500 applied to a PHY device provided in the present disclosure;
FIG. 16 is a third flowchart of a physical layer-based data forwarding method 500 applied to a PHY device provided in the present disclosure;
FIG. 17 is a schematic structural diagram of a PHY chip provided in the present disclosure; and
FIG. 18 is a schematic structural diagram of an electronic device provided in the present disclosure.

### DETAILED DESCRIPTION

Nowadays, vehicle devices and functions thereof tend to be diversified. A vehicle may comprise a master control device and a plurality of slave devices, with data transmission and interaction among the master control device and the plurality of slave devices. For example, in a vehicle audio data transmission scenario, a vehicle comprises an audio master control unit and a plurality of speakers, wherein the speakers tend to have diverse functions, for example, the vehicle speakers can realize, e.g., an entertainment function of music play, a call function of making or answering a call, or a voice control function of speech recognition. The number of vehicle speakers is also gradually increasing. Speaker audio data transmission can be implemented through the physical layer by harmonizing the plurality of vehicle speakers to achieve high-quality user experience. At present, one of mainstream modes is to implement data transmission among various vehicle speakers, that is, audio nodes, using a serial bus-based digital daisy-chain transmission network solution. However, this transmission solution has defects such as insufficient bandwidth and low transmission rate, thus failing to support large-scale node interconnection and application to a complex communication structure.

It should be understood that the term "vehicle," "vehicle-mounted," or "in-vehicle," or other similar terms used herein generally include various private vehicles or commercial vehicles, such as a sedan, a sport utility vehicle, a bus, or a truck, further include various boats, ships, aircrafts, etc., and include a hybrid vehicle, an electric vehicle, a plug-in hybrid electric vehicle, a hydrogen-powered vehicle, other alternative fuel vehicles, and the like.

Therefore, the present disclosure provides a data forwarding method based on a vehicle Ethernet physical layer, thereby implementing a network data forwarding solution by transforming the vehicle Ethernet physical layer, and then implementing high-bandwidth, high-speed, high-precision, and low-delay data transmission by connecting sub-nodes through a physical transmission medium. For example, based on 100Base-T1, as a physical layer communication standard in vehicle Ethernet, data communication can be implemented among various electronic systems in a vehicle through a physical transmission medium such as a twisted pair, such as an in-vehicle infotainment, an in-vehicle information system, or an advanced driver assistance system. The 100Base-T1 supports a data transmission rate up to 100 Mbps, can satisfy the requirements for large volume of data, such as high-quality audio and video data transmission, and also has good anti-interference performance. However, the 100Base-T1 only supports point-to-point communication. Therefore, the present disclosure provides a data forwarding method based on the vehicle Ethernet physical layer, thereby implementing a network forwarding solution by transforming the vehicle Ethernet, and then implementing high-bandwidth, high-speed, and high-precision data transmission by connecting the sub-nodes through the physical transmission medium such as the twisted pair, to address the problems existing in a current vehicle data transmission solution based on a daisy-chain network.

The technical solutions in the present disclosure will be clearly and completely described below with reference to the drawings. Obviously, the described embodiments are merely used for explaining the present disclosure, rather than limiting the present disclosure. All other embodiments obtained by those of ordinary skills in the art based on the embodiments of the present disclosure without creative work are encompassed within the scope of protection of the present disclosure. In addition, it should be further noted that, for ease of description, only the portions related to the present disclosure, instead of all structures, are shown in the drawings.

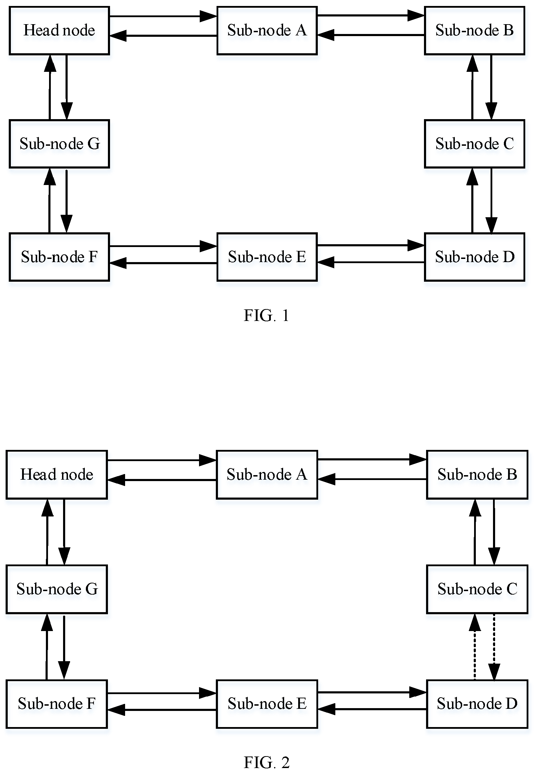

FIG. 1 is a first schematic structural diagram of a network provided in an embodiment of the present disclosure. As shown in FIG. 1, the network comprises a head node and a plurality of sub-nodes. The head node is usually a master control device, and the sub-nodes are usually slave devices. The head node and the plurality of sub-nodes are connected through a physical transmission medium, for example, a twisted pair. In the figure, the number of sub-node is, as an example, 7. It should be understood that the embodiment of the present disclosure does not impose any limitation on the number of sub-nodes. In FIG. 1, the head node is connected to a sub-node A through the physical transmission medium, then sub-nodes B, C, D, E, F, and G are sequentially connected through the physical transmission medium, and the sub-node G is connected to the head node through the physical transmission medium, thereby forming a complete ring network link, in which each of the sub-nodes can support a data forwarding function. For example, the sub-node A adjacent to the head node can receive data transmitted by the head node and forward the data to the sub-node B, while the sub-node B adjacent to the sub-node A can, after receiving the data, forward the data to the sub-node C, thus forming a complete ring network link to implement data transmission.

For example, during vehicle audio data transmission, the head node shown in FIG. 1 may be an audio master control device, that is, an audio source, specifically for example, a vehicle audio master control unit, a vehicle media player or a master control unit of an in-vehicle infotainment system, and the sub-nodes may be audio slave devices. The sub-nodes are connected to the head node through the physical transmission medium such as the twisted pair for communication. The sub-nodes are specifically, for example, audio players with, e.g., a speaker, a microphone, an audio amplifier, or a digital signal processor.

During downlink data transmission, which refers to data transmission in a transmission direction of sending data from the head node to the sub-nodes, the head node can sequentially send, e.g., data or a remote-control instruction downward to the sub-nodes based on the network structure shown in FIG. 1, wherein each of the sub-nodes supports the data forwarding function. For example, the head node, as a vehicle media player, transmits generated audio data to a plurality of vehicle speakers, that is, the plurality of sub-nodes for playing. Specifically, the head node first transmits the generated audio data to the sub-node A, the sub-node A receives and then forwards the audio data to the sub-node B, and then the sub-node B receives and forwards the audio data to the succeeding node until all nodes and sub-nodes in the network shown in FIG. 1 receive the audio data through the complete ring network link, thereby implementing audio playing. It should be understood that during the downlink data transmission, forwarding and transmission may also be implemented only among the sub-nodes. That is to say, the data transmitted downward from a sub-node may not be first generated by the head node, but may be generated by one of the sub-nodes itself and transmitted to and received by another sub-node in a downlink direction.

During uplink data transmission, which refers to data transmission in a transmission direction of sending data from one of the sub-nodes to the head node, the head node can receive the data transmitted from the sub-node based on the network structure shown in FIG. 1 for active noise control (ANC), echo cancellation, call data processing, etc., wherein each of the sub-nodes also supports the data forwarding function. For example, the head node, as a vehicle media player, can collect noise signals in audio data of the plurality of vehicle speakers, that is, the plurality of sub-nodes, and eliminate the impact of these noise signals on the audio quality by active inhibition, that is, active noise control, of these noise signals. Specifically, audio data with a noise signal generated by each sub-node will be transmitted to the head node through the network. For example, the sub-node G transmits its audio data with a noise signal to the sub-node F, then the audio data is sequentially forwarded from the sub-node F to the sub-node E and forwarded from the sub-node E to the succeeding node, and finally, the head node receives the audio data with the noise signal transmitted by the sub-node G; and the sub-node F transmits its audio data with a noise signal to the sub-node E, then the audio data is sequentially forwarded from the sub-node E to the sub-node D and forwarded from the sub-node D to the succeeding node, and finally the head node receives the noisy audio data transmitted by the sub-node F. Similarly, the head node can collect the noise signals in the audio data of the plurality of sub-nodes through the forwarding and transmission by the sub-nodes in the network, thereby implementing active noise control. It should be understood that during the uplink data transmission, forwarding and transmission may also be implemented only among the sub-nodes. That is to say, the data transmitted upward from a sub-node may not be last received by the head node, but by another sub-node in an uplink direction.

FIG. 2 is a second schematic structural diagram of a network provided in an embodiment of the present disclosure. As shown in FIG. 2, the network comprises a head node and a plurality of sub-nodes. The head node is usually a master control device, and the sub-nodes are usually slave devices. The head node and the plurality of sub-nodes are connected through a physical transmission medium. The number of sub-nodes in the figure is, as an example, 7. Different from the network structure shown in FIG. 1, the network structure shown in FIG. 2 supports disconnection among sub-nodes. Specifically, in FIG. 2, the head node is connected to the sub-node A through the physical transmission medium, while two adjacent nodes among the sub-nodes B, C, D, E, F, and G may be disconnected, and the other nodes are sequentially connected through the physical transmission medium. It should be understood that two adjacent nodes may be disconnected by software configuration, or by hardware, such as disconnecting the physical transmission medium between the nodes. The embodiments of the present disclosure do not impose any limitation on the disconnection mode. For example, the sub-node C may be disconnected from the sub-node D, that is to say, the sub-node C is not connected to the sub-node D through the physical transmission medium, but the head node, the sub-node B, and the sub-node C are sequentially connected through the physical transmission medium, and the sub-nodes D, E, F, and G, and the head node are also sequentially connected through the physical transmission medium. That is to say, the overall network structure can be divided into two links: the first link comprises the head node and the sub-nodes A, B and C, and the second link comprises the head node and the sub-nodes G, F, E and D. Each sub-node can support a data forwarding function. For example, the sub-node A adjacent to the head node can receive data transmitted by the head node and forward the data to the sub-node B, and the sub-node B adjacent to the sub-node A can, after receiving the data, forward the data to the sub-node C. For another example, the sub-node G adjacent to the head node can also receive data transmitted by the head node and forward the data to the sub-node F, and the sub-node F adjacent to the sub-node G can, after receiving the data, forward the data to the sub-node E.

The network structure shown in FIG. 2 supports disconnection among the sub-nodes, which can improve the system fault tolerance of the network and shorten the transmission delay to ensure the synchronization and real-time nature of the transmission. Specifically, in a real-world vehicle application scenario, if a vehicle audio system malfunctions, for example, the sub-node D fails, in a complete ring network as shown in FIG. 1, only the head node and the sub-nodes A, B, and C can transmit audio data normally. However, if the network structure shown in FIG. 2 is used, if the sub-node D fails, the sub-node C may be disconnected from the sub-node D, and the overall network structure can then be divided into two links: the first link comprises the head node and the sub-nodes A, B, and C, and the second link comprises the head node and the sub-nodes G, F, E, and D, so that the failure of the sub-node D will not affect data transmission on the first link, nor will the data transmission among the head node and the sub-nodes G, F, and E be affected on the second link. Therefore, the network structure shown in FIG. 2 can improve the system fault tolerance of the network, and reduce the impact of sub-node failure on data transmission. In addition, use of the network structure shown in FIG. 2 can support disconnection among the sub-nodes, thus dividing the network structure into two links. Then the data transmitted by the head node downward can be transmitted on the first link and the second link simultaneously. Compared with the network structure of a complete ring network link shown in FIG. 1, use of the network structure shown in FIG. 2 for data transmission can shorten the data transmission delay, thereby ensuring the synchronization and real-time nature of data transmission among different nodes, and improving user experience.

During the vehicle audio data transmission, the head node shown in FIG. 2 may be an audio master control device, specifically for example, a vehicle media player or a master control unit of an in-vehicle infotainment system, and the sub-nodes may be audio slave devices. The sub-nodes are connected to the head node through the physical transmission medium such as the twisted pair for communication. The sub-nodes are specifically, for example, audio players with, e.g., a speaker, a microphone, an audio amplifier, or a digital signal processor.

During the downlink data transmission, the head node can sequentially send, e.g., audio data or a remote-control instruction downward to the sub-nodes based on the network structure shown in FIG. 2. Each sub-node supports the data forwarding function. For example, the head node, as a vehicle media player, transmits the generated audio data to the plurality of vehicle speakers, i.e., the plurality of sub-nodes, for playing. Specifically, the network structure shown in FIG. 2 can be divided into two links: the first link comprises a head node and sub-nodes A, B, and C, and the second link comprises the head node and sub-nodes G, F, E, and D. The head node first transmits the generated audio data to the sub-nodes A and G respectively. In the first link, the sub-node A receives the audio data and then forwards it to the sub-node B, and then the sub-node B receives it and forwards it to the sub-node C. In the second link, the sub-node G receives it and forwards it to the sub-node F, and then the sub-node F receives it and forwards it to the succeeding node, until the sub-node D receives the audio data generated by the head node. Thus, all sub-nodes in both links receive the audio data, thereby implementing audio playing.

During the uplink data transmission, the head node similarly can receive the data transmitted from the sub-node based on the network structure shown in FIG. 2 for active noise control (ANC), echo cancellation, call data processing, etc., wherein each of the sub-nodes also supports the data forwarding function. For example, the head node, as a vehicle media player, can collect noise signals in audio data of the plurality of vehicle speakers, that is, the plurality of sub-nodes, and eliminate the impact of these noise signals on the audio quality by active inhibition, that is, active noise control, of these noise signals. Specifically, audio data with a noise signal generated by each sub-node will be transmitted to the head node through the network. The network structure shown in FIG. 2 can be divided into two links: the first link comprises the head node and the sub-nodes A, B, and C, and the second link comprises the head node and the sub-nodes G, F, E, and D. For example, in the first link, the sub-node C transmits its audio data with a noise signal to the sub-node B, and then the audio data is forwarded from the sub-node B to the sub-node A and then forwarded from the sub-node A to the head node; and in the second link, the sub-node D transmits its audio data with a noise signal to the sub-node E, then the audio data is forwarded from the sub-node E to the sub-node F and then forwarded from the sub-node F to the succeeding node, and finally, the head node receives the audio data with the noise signal transmitted by the sub-node D. Similarly, the head node can collect the noise signals in the audio data of the plurality of sub-nodes through the forwarding and transmission by the sub-nodes in the two links of the network structure, thereby implementing active noise control.

Further, in the network structure shown in FIG. 1 or FIG. 2, each of the sub-nodes can support the data forwarding function, thereby implementing data transmission. However, the conventional vehicle Ethernet only supports point-to-point communication. In order to implement a transmission network solution with a high transmission rate and a high bandwidth, an embodiment of the present disclosure provides a schematic structural diagram of sub-nodes supporting the forwarding function in FIG. 1 or FIG. 2, which can implement high-bandwidth, high-speed, and high-precision data transmission.

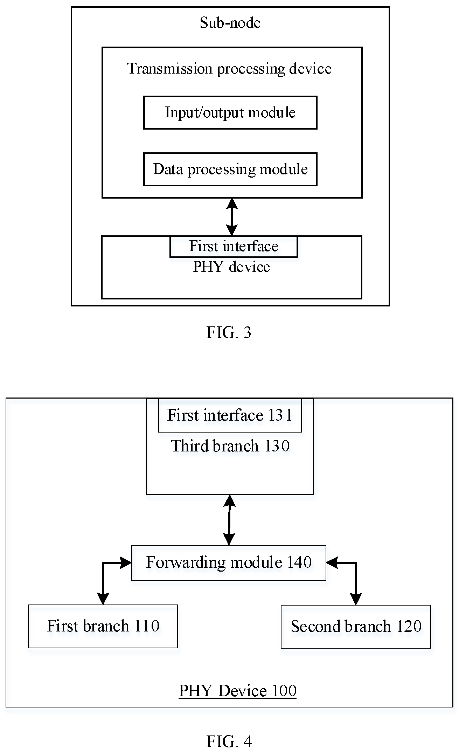

FIG. 3 shows a schematic structural diagram of a sub-node supporting the forwarding function in FIG. 1 or 2. As shown in FIG. 3, each sub-node in the network shown in FIG. 1 or 2 may comprise a physical layer (PHY) device and a transmission processing device, wherein the PHY device comprises a first interface, and the PHY device is connected to the transmission processing device through the first interface. The transmission processing device may comprise a data processing module and an input/output module. The data processing module and the input/output module may be connected through, for example, an I2S (Inter-IC Sound) interface. The PHY device is connected to the data processing module through the first interface. The first interface may be a physical interface such as an MII interface, an I2S (Inter-IC Sound) interface, a TDM interface, or an SPI interface.

Optionally, the transmission processing device may not comprise a data processing module, and the PHY device is connected to the input/output module through the first interface. The first interface may specifically be a physical interface such as an I2S interface, a TDM interface, or an SPI interface.

It should be understood that the embodiments of the present disclosure do not impose any limitation on specific implementation of the first interface. The specific implementation of the first interface depends on a module in the transmission processing device to which the PHY device is connected, as long as the first interface enables normal communication between the PHY device and the transmission processing device.

The PHY device is mainly configured to implement the data forwarding function among the sub-nodes in the network structure shown in FIG. 1 or FIG. 2. Through the PHY device, each sub-node can implement the data forwarding function, thereby implementing data transmission of the overall network. Further, the PHY device is responsible for the data transmission and conversion of the physical layer, and sending converted data to the transmission processing device. The PHY device may be a PHY chip.

The data processing module is connected to the PHY device through the first interface. The data processing module is configured to receive data transmitted from the PHY device and perform data processing. For example, during audio data transmission, the data processing module may comprise audio data algorithm processing and sound effect enhancement functions, such as an equalizer, reverberation, or compression. The audio processing module processes an audio signal in real time, to satisfy particular audio effect requirements. The data processing module may be, for example, a microcontroller unit (MCU) or a digital signal processor (DSP), and can send the processed data to the input/output module through an interface such as the I2S.

The input/output module is connected to the data processing module. The input/output module is configured to interact with an external environment. For example, during audio data transmission, the input/output module is configured to play audio data or collect audio data. The input/output module may be a speaker for playing audio data, or may be a microphone for collecting audio data in the environment.

Further, an embodiment of the present disclosure provides a PHY device 100. FIG. 4 shows a schematic structural diagram of the PHY device 100. Moreover, for the downlink signal transmission, an embodiment of the present disclosure provides a physical layer-based data forwarding method 200. The PHY device with the sub-nodes as shown in FIG. 3 in the transmission network is the PHY device shown in FIG. 4. The PHY device may be a PHY chip, or may be an additional PHY device capable of implementing functions of the vehicle Ethernet physical layer. As shown in FIG. 1 or FIG. 2, the network comprises a head node and a plurality of sub-nodes.

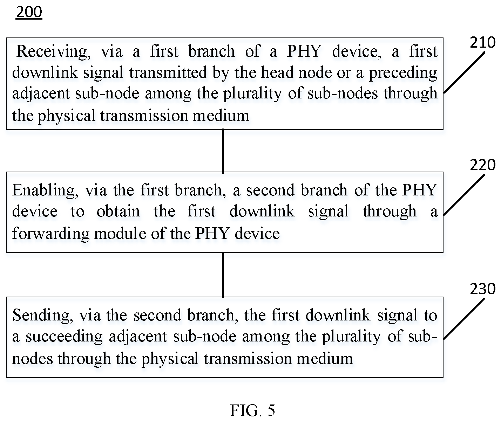

FIG. 5 is a first flowchart of a physical layer-based data forwarding method 200 applied to a PHY device provided in the present disclosure. As shown in FIG. 5, the method 200 comprises some or all of steps below:
S210: receiving, via a first branch of the PHY device, a first downlink signal transmitted by a head node or a preceding adjacent sub-node through a physical transmission medium.
S220: enabling, via the first branch, a second branch of the PHY device to obtain the first downlink signal through a forwarding module of the PHY device.
S230: sending, via the second branch, the first downlink signal to a succeeding adjacent sub-node through the physical transmission medium.

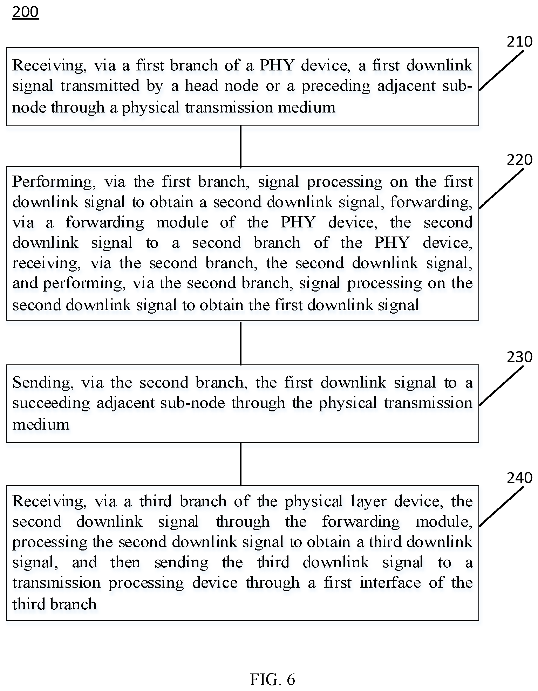

In the S220 of the above method 200, as shown in FIG. 6, the enabling, via the first branch, the second branch to obtain the first downlink signal through the forwarding module specifically comprises: performing, via the first branch, signal processing on the first downlink signal to obtain a second downlink signal, forwarding, via the forwarding module, the second downlink signal to the second branch, receiving, via the second branch, the second downlink signal, and performing, via the second branch, signal processing on the second downlink signal to obtain the first downlink signal.

Further, as shown in FIG. 6, the method 200 may further comprise S240:
receiving, via a third branch of the physical layer device, the second downlink signal through the forwarding module, processing the second downlink signal to obtain a third downlink signal, and then sending the third downlink signal to a transmission processing device through a first interface of the third branch.

Based on the method 200, the present disclosure further presents three embodiments. Correspondingly, there are three specific schematic structural diagrams for the PHY device 100 in FIG. 4.

### Embodiment 1

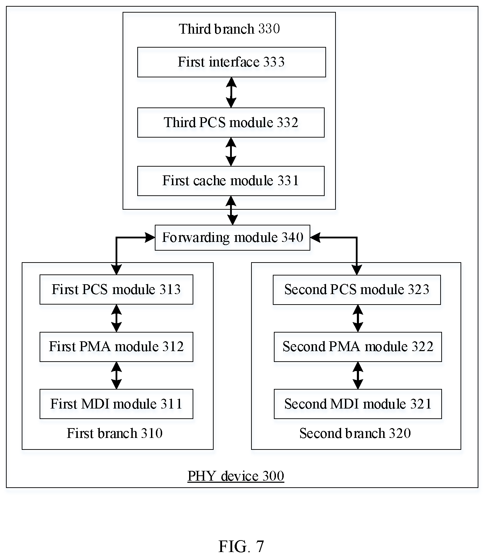

FIG. 7 is a specific schematic structural diagram of a PHY device. As shown in FIG. 7, the PHY device 300 comprises a first branch 310, a second branch 320, and a third branch 330. The first branch 310 comprises a first Medium Dependent Interface (MDI) module 311, a first Physical Medium Attachment Sublayer (PMA) module 312, and a first Physical Coding Sublayer (PCS) module 313. Correspondingly, the second branch 320 comprises a second MDI module 321, a second PMA module 322, and a second PCS module 323.

During the downlink signal transmission, in the S210 and the S220, the first branch 310 first receives the first downlink signal transmitted by the head node or the preceding adjacent sub-node through the physical transmission medium and processes the first downlink signal to obtain the second downlink signal. It should be understood that the preceding adjacent sub-node herein represents a preceding adjacent sub-node in the downlink signal transmission direction. Specifically, the first MDI module 311 is configured to connect the PHY device to the physical transmission medium, thereby connecting the nodes including the head node and the sub-nodes through the physical transmission medium. The first MDI module 311 receives the first downlink signal transmitted by the preceding adjacent sub-node or the head node through the physical transmission medium. In addition, the first MDI module 311 not only can receive the first downlink signal transmitted through the physical transmission medium, but also can perform some additional operations such as current driving and voltage adjustment for the physical transmission medium, to ensure that the first downlink signal can be accurately transmitted to the PHY device.

The first PMA module 312 receives the first downlink signal transmitted from the first MDI module 311, and during the downlink signal transmission, the first PMA module 312 is configured to perform signal processing such as demodulation on the first downlink signal to convert the first downlink signal into a digital signal processable by the first PCS module 313. The demodulation specifically includes analog-to-digital conversion and signal recovery of the signal. In addition, during the audio data transmission, the first PMA module 312 can further recover PMA token of the received signal processed by the first MDI module 311 by ECHO elimination and equalization algorithm, and then send the signal to the first PCS module 313, so as to improve the data transmission quality and reduce the bit error rate.

The first PCS module 313 receives the processed digital signal from the first PMA module 312, descrambles the signal to obtain the second downlink signal, wherein the second downlink signal is 3-bit data, and forwards the second downlink signal to the second branch 320 through the forwarding module 340.

In the S220, the second branch 320 receives the second downlink signal and then performs signal processing on the second downlink signal to obtain the first downlink signal. That is to say, the signal processing operation performed by the second branch 320 is equivalent to a reverse process of the signal processing performed by the first branch 310.

Specifically, after receiving the second downlink signal through the forwarding module 340, the second PCS module 323 in the second branch 320 scrambles the second downlink signal, and sends the scrambled second downlink signal to the second PMA module 322.

The second PMA module 322 receives the digital signal processed by the second PCS module 323, and modulates the digital signal to convert it into an analog signal transmittable in the second MDI module 321. That is to say, the second PMA module 322 converts the received data into data mappable to the physical transmission medium, to adapt to transmission features of the physical transmission medium and convert the data into an analog signal adapted to transmission on the physical transmission medium, wherein the modulation specifically includes encoding and digital-to-analog conversion of the signal.

In the S230, the second MDI module 321 in the second branch 320 receives the analog signal processed by the second PMA module 322, and transmits the analog signal to the succeeding adjacent sub-node through the physical transmission medium, wherein the succeeding adjacent sub-node represents a succeeding adjacent sub-node in the downlink signal transmission direction.

In the S240, the physical layer device further comprises a third branch 330, the third branch 330 comprises a first interface 333, and the third branch 330 receives the second downlink signal through the forwarding module 340, processes the second downlink signal to obtain a third downlink signal, and then sends the third downlink signal to the transmission processing device through the first interface 333.

Specifically, in FIG. 7, the third branch 330 comprises a cache module and a third PCS module 332, and the third branch 330 comprises a first interface 333, a third PCS module 332, and a first cache module 331.

The first cache module 331 in the third branch 330 receives the second downlink signal transmitted by the first PCS module 313 through the forwarding module 340. The first cache module 331 is configured to cache data to provide appropriate data delay and alignment, thereby ensuring correct transmission of data. Specifically, the first cache module 331 not only receives the second downlink signal transmitted by the first PCS module 313, but also sends the second downlink signal to the third PCS module 332. The second downlink signal in the first PCS module 313 is 3-bit data, and the 3-bit data needs to be converted into 4-bit data by the third PCS module 332 before it can be further transmitted to the first interface 333. In other words, the third PCS module 332 implements 3-bit to 4-bit data conversion, that is, data adaptation. Generally, 4-bit data corresponds to a 25M clock domain, and 3-bit data corresponds to a 33.3M clock domain. Therefore, between the first PCS module 313 and the third PCS module 332, there is a conversion between different clock domains. The first cache module 331 is required to provide intermediate storage between different clock domains, that is, to temporarily store data, so as to send data at different clock frequencies, and process rate difference between the clock domains, thereby ensuring correct transmission of data.

The third PCS module 332 receives the second downlink signal transmitted by the first PCS module 313 and cached by the first cache module 331, and converts the second downlink signal into 4-bit data, that is, the third downlink signal, thereby sending the third downlink signal to the first interface 333. Through the first interface 333, the third branch 330 sends the third downlink signal to the transmission processing device.

The third downlink signal is used for the transmission processing device to interact with the external environment. For example, during the audio data transmission, the sub-nodes are audio players, wherein the transmission processing device may comprise a data processing module such as a MCU or DSP, which is used for, e.g., audio data algorithm processing or sound effect enhancement on the third downlink signal. The transmission processing device further comprises an input/output device such as a speaker. The third downlink signal is processed by the data processing module and then transmitted to the input/output device for audio playing.

In addition, in the specific structure of the PHY device shown in FIG. 7, the forwarding module 340 is arranged between the first PCS module 313 of the first branch 310 and the second PCS module 323 of the second branch 320, and arranged between the first PCS module 313 of the first branch 310 and the first cache module 331 of the third branch 330, so that there is a short forwarding delay, which is conducive to data synchronization among the sub-nodes.

### Embodiment 2

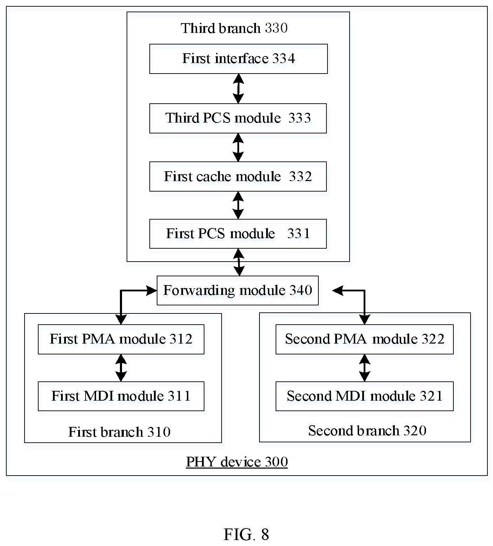

FIG. 8 is a second specific schematic structural diagram of a PHY device. Optionally, the forwarding module 340 may also be configured as the specific structure of the PHY device 300 shown in FIG. 8. In the specific structure of the PHY device shown in FIG. 8, a first branch 310 comprises a first MDI module 311 and a first PMA module 312, a second branch 320 comprises a second MDI module 321 and a second PMA module 322, and a third branch 330 comprises a first PCS module 331, a first cache module 332, a third PCS module 333, and a first interface 334, and a forwarding module 340340 is provided between the first PMA module 312 of the first branch 310 and the second PMA module of the second branch 320, and provided between the first PMA module of the first branch 310 and the first PCS module 331 of the third branch 330.

That is to say, in the method 200, what is different from the embodiment 1 shown in FIG. 7 is that the first branch 310 in FIG. 7 obtains the second downlink signal after processing by the first MDI module 311, the first PMA module 312, and the first PCS module 313, while the first branch 310 in FIG. 8 obtains the second downlink signal through the first MDI module 311 and the first PMA module 312. Specifically, the first PMA module 312 performs signal processing such as demodulation on the first downlink signal transmitted from the first MDI module 311 and converts it into a digital signal, that is, the second downlink signal, processable by the first PCS module 331, and then transmits the second downlink signal to the second branch 320 and the third branch 330 through the forwarding module 340.

In FIG. 8, the second branch 320 receives the second downlink signal and performs signal processing to obtain the first downlink signal, and the signal processing operation performed by the second branch 320 is equivalent to a reverse process of the signal processing performed by the first branch 310. The third branch 330 receives the second downlink signal, performs signal processing to obtain the third downlink signal, and sends it to the transmission processing device through the first interface.

It should be understood that during the downlink signal transmission, the signal processing operations performed by the modules of the first branch 310 and the third branch 330 in FIG. 8 are same as the signal processing operations performed by the modules of the first branch 310 and the third branch 330 in FIG. 7, and the relevant description in FIG. 7 may be referred to. For the sake of brevity, no further details will be given here. The second branch 320 in FIG. 8 is equivalent to the reverse process of signal processing performed by the first branch 310, and will not be repeated here for the sake of brevity.

### Embodiment 3

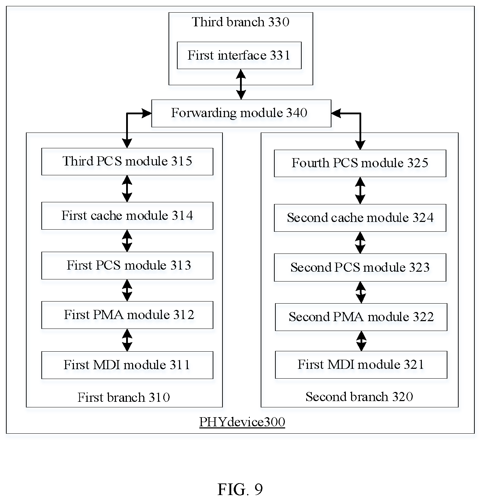

FIG. 9 is a third specific schematic structural diagram of a PHY device. Optionally, the forwarding module 340 may also be configured as the specific structure of the PHY device 300 shown in FIG. 9. In the specific structure of the PHY device shown in FIG. 9, a first branch 310 comprises a first MDI module 311, a first PMA module 312, a first PCS module 313, a first cache module 314, and a third PCS module 315, the second branch 320 comprises a second MDI module 321, a second PMA module 322, a second PCS module 323, a second cache module 324, and a fourth PCS module 325, and the third branch 330 comprises a first interface 331. The forwarding module 340 is arranged between the third PCS module 315 of the first branch 310 and the fourth PCS module 325 of the second branch 320, and arranged between the third PCS module 315 of the first branch 310 and the first interface 331 of the third branch 330.

That is to say, in the method 200, what is different from the embodiment 1 shown in FIG. 7 is that the first branch 310 in FIG. 7 obtains the second downlink signal after processing by the first MDI module 311, the first PMA module 312, and the first PCS module 313, while the first branch 310 in FIG. 9 obtains the second downlink signal through the first MDI module 311, the first PMA module 312, the first PCS module 313, the first cache module 314, and the third PCS module 315, and transmits the second downlink signal to the second branch 320 and the third branch 330 through the forwarding module 340.

In FIG. 9, the second branch 320 receives the second downlink signal and performs signal processing to obtain the first downlink signal, and the signal processing operation performed by the second branch 320 is equivalent to a reverse process of the signal processing performed by the first branch 310. The third branch 330 receives the second downlink signal, performs signal processing to obtain the third downlink signal, and sends it to the transmission processing device through the first interface.

It should be understood that during the downlink signal transmission, the signal processing operations performed by the modules of the first branch 310 and the third branch 330 in FIG. 9 are same as the signal processing operations performed by the modules of the first branch 310 and the third branch 330 in FIG. 7, and the relevant description in FIG. 7 may be referred to. For the sake of brevity, no further details will be given here. The second branch 320 in FIG. 9 is equivalent to the reverse process of signal processing performed by the first branch 310, and will not be repeated here for the sake of brevity.

Therefore, with the method 200, each sub-node in the network structure shown in FIG. 1 or FIG. 2 can support the forwarding function, thereby sending, e.g., data or a remote-control instruction from the head node downward to each sub-node, or transmitting data from each sub-node to another sub-node in the downlink direction. The method 200 can implement network data transmission with a high transmission rate, a high bandwidth, and a high precision, thereby reducing the data forwarding delay by the sub-nodes, and contributing to data synchronization between the sub-nodes.

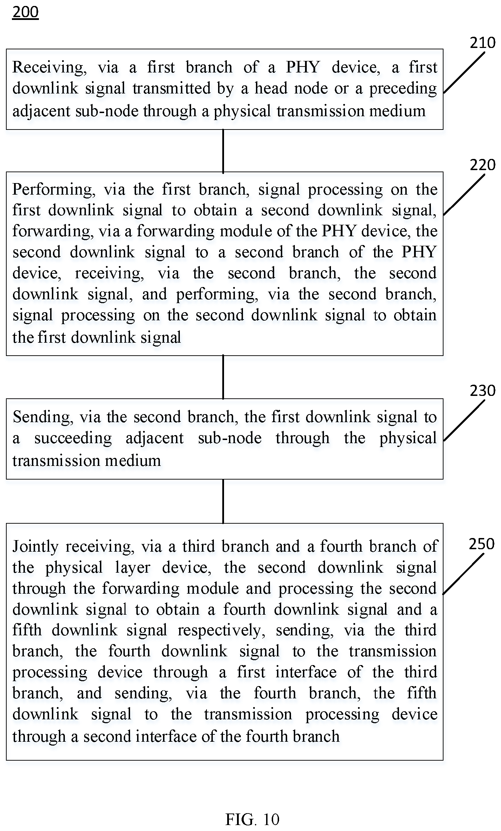

Or, further, as shown in FIG. 10, the method 200 may comprise S250:
jointly receiving, via a third branch and a fourth branch of the physical layer device, the second downlink signal through the forwarding module and processing the second downlink signal to obtain a fourth downlink signal and a fifth downlink signal respectively, sending, via the third branch, the fourth downlink signal to the transmission processing device through a first interface of the third branch, and sending, via the fourth branch, the fifth downlink signal to the transmission processing device through a second interface of the fourth branch.

Compared with the method 200 comprising the S240, in the method 200 comprising the S250, the PHY device further comprises a fourth branch, and the third branch and the fourth branch jointly receive the second downlink signal through the forwarding module. That is to say, the third branch receives a portion of the second downlink signal, and the fourth branch receives the other portion of the second downlink signal, they perform same operation and processing on the received portions of the second downlink signal respectively to obtain the fourth downlink signal and the fifth downlink signal. The third branch sends the fourth downlink signal to the transmission processing device through the first interface, and the fourth branch sends the fifth downlink signal to the transmission processing device through the second interface. It should be understood that, compared with the S240, there are two branches in the S250 that jointly receive the second downlink signal and process it before transmitting it to the transmission processing device, thereby increasing the signal transmission bandwidth and improving the transmission rate. For the transmission processing device, the third downlink signal received through the S240 is equivalent to the fourth downlink signal and the fifth downlink signal received through the S250. The provided fourth branch will not affect the results received by the transmission processing device, and will only be conductive to increasing the signal transmission bandwidth.

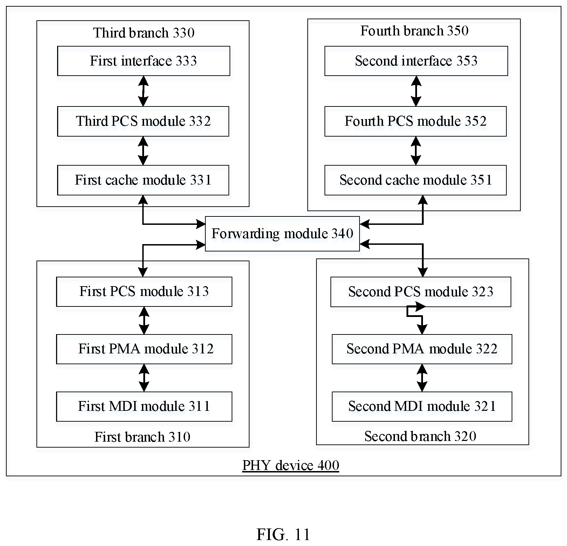

Based on the method 200 comprising the S250 as shown in FIG. 10, the present disclosure provides three embodiments. Correspondingly, for the PHY device 100 in FIG. 4, there are three specific schematic structural diagrams of the PHY device, namely FIGS. 11, 12, and 13.

### Embodiment 1

Compared with the PHY device shown in FIG. 7, the PHY device shown in FIG. 11 further comprises a fourth branch 350. The fourth branch 350 has a same structure as the third branch 330. The fourth branch 350 comprises a second cache module 351, a fourth PCS module 352, and a second interface 352. The third branch 330 and the fourth branch 350 jointly receive the second downlink signal through the forwarding module 340. That is to say, the third branch 330 receives a portion of the second downlink signal, and the fourth branch 350 receives the other portion of the second downlink signal. The processing performed by the third branch 330 on the received portion of the second downlink signal and the processing performed by the fourth branch 350 on the received other portion of the second downlink signal are completely consistent with the processing performed by the third branch 330 on the second downlink signal in FIG. 7, thereby obtaining the fourth downlink signal and the fifth downlink signal respectively. The third branch 330 sends the fourth downlink signal to the transmission processing device through the first interface, and the fourth branch 350 sends the fifth downlink signal to the transmission processing device through the second interface 352. The relevant description of the third branch 330 in FIG. 7 is referred to for the specific operations performed by the third branch 330 and the fourth branch 350 herein. For the sake of brevity, no further details will be given here.

Therefore, through the S250, the second downlink signal can be processed simultaneously by two branches and then transmitted to the transmission processing device, thereby increasing the signal transmission bandwidth and further improving the transmission rate, to satisfy a more complex transmission scenario.

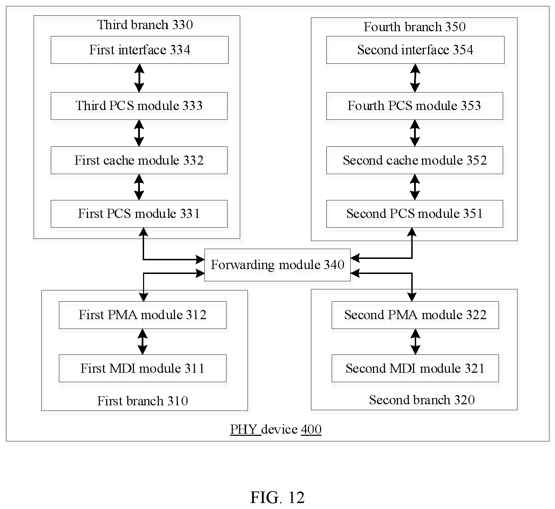

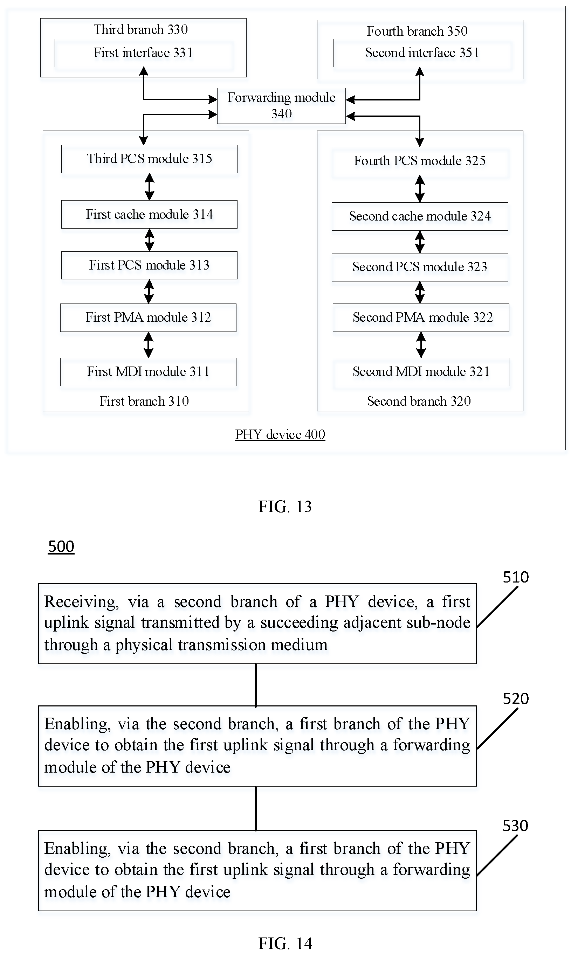

Optionally, based on the S250 shown in FIG. 10, an embodiment of the present disclosure further provides a second specific schematic structural diagram of the PHY device related to FIG. 8 and shown in FIG. 12, and a third specific schematic structural diagram of the PHY device related to FIG. 9 and shown in FIG. 13.

### Embodiment 2

Compared with the PHY device shown in FIG. 8, the PHY device shown in FIG. 12 further comprises a fourth branch 350. The fourth branch 350 has a same structure as the third branch 330. The fourth branch 350 comprises a second PCS module 351, a second cache module 352, a fourth PCS module 353, and a second interface 354. The third branch 330 and the fourth branch 350 jointly receive the second downlink signal through the forwarding module 340. That is to say, the third branch 330 receives a portion of the second downlink signal, and the fourth branch 350 receives the other portion of the second downlink signal. The processing performed by the third branch 330 on the received portion of the second downlink signal and the processing performed by the fourth branch 350 on the received other portion of the second downlink signal are completely consistent with the processing performed by the third branch 330 on the second downlink signal in FIG. 8, thereby obtaining the fourth downlink signal and the fifth downlink signal respectively. The third branch 330 sends the fourth downlink signal to the transmission processing device through the first interface, and the fourth branch 350 sends the fifth downlink signal to the transmission processing device through the second interface. The relevant description of the third branch 330 in FIG. 8 is referred to for the specific operations performed by the third branch 330 and the fourth branch 350 herein. For the sake of brevity, no further details will be given here.

### Embodiment 3

Compared with the PHY device shown in FIG. 9, the PHY device shown in FIG. 13 further comprises a fourth branch 350. The fourth branch 350 has a same structure as the third branch 330. The fourth branch 350 comprises a second interface 351. The third branch 330 and the fourth branch 350 jointly receive the second downlink signal through the forwarding module 340. That is to say, the third branch 330 receives a portion of the second downlink signal, and the fourth branch 350 receives the other portion of the second downlink signal. The processing performed by the third branch 330 on the received portion of the second downlink signal and the processing performed by the fourth branch 350 on the received other portion of the second downlink signal are completely consistent with the processing performed by the third branch 330 on the second downlink signal in FIG. 9, thereby obtaining the fourth downlink signal and the fifth downlink signal respectively. The third branch 330 sends the fourth downlink signal to the transmission processing device through the first interface 331, and the fourth branch 350 sends the fifth downlink signal to the transmission processing device through the second interface 351. The relevant description of the third branch 330 in FIG. 9 is referred to for the specific operations performed by the third branch 330 and the fourth branch 350 herein. For the sake of brevity, no further details will be given here.

Therefore, through the S250, the signal forwarded through the forwarding module is transmitted to the transmission processing device simultaneously through two branches, thereby increasing the signal transmission bandwidth and improving the transmission rate.

Further, for the uplink signal transmission, the present disclosure presents the method 500 shown in FIG. 14.

FIG. 14 is a flowchart of a physical layer-based data forwarding method 500 applied to a PHY device provided in the present disclosure. As shown in FIG. 14, the method 500 comprises some or all of steps below:
S510: receiving, via a second branch of the PHY device, a first uplink signal transmitted by a succeeding adjacent sub-node through a physical transmission medium.
S520: enabling, via the second branch, a first branch of the PHY device to obtain the first uplink signal through a forwarding module of the PHY device.
S530: sending, via the first branch, the first uplink signal to a preceding adjacent sub-node or a head node through the physical transmission medium.

In the S520 of the above method 500, the enabling, via the second branch, the first branch to obtain the first uplink signal through the forwarding module specifically comprises: performing, via the second branch, signal processing on the first uplink signal to obtain a second uplink signal, forwarding, via the forwarding module, the second uplink signal to the first branch, receiving, via the first branch, the second uplink signal, and performing, via the first branch, signal processing on the second uplink signal to obtain the first uplink signal.

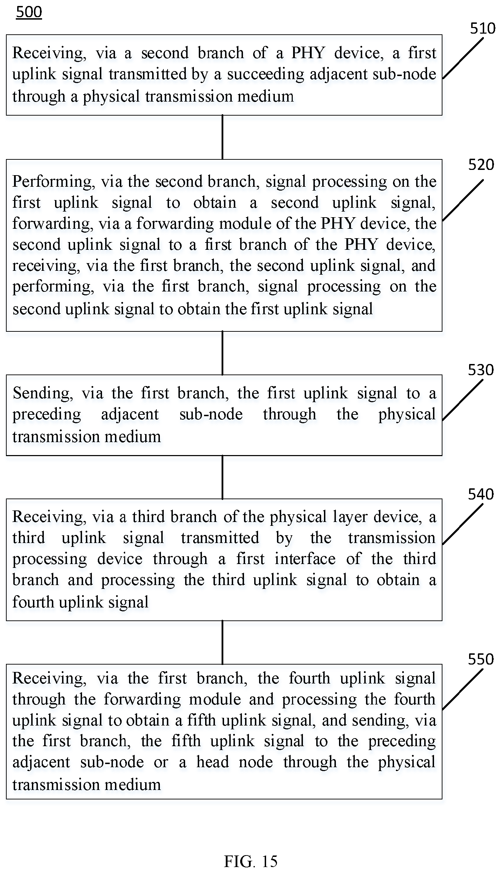

Further, as shown in FIG. 15, the method 500 may further comprise S540 and S550:
S540: receiving, via a third branch of the physical layer device, a third uplink signal transmitted by the transmission processing device through a third interface of the third branch and processing the third uplink signal to obtain a fourth uplink signal.
S550: receiving, via the first branch, the fourth uplink signal through the forwarding module and processing the fourth uplink signal to obtain a fifth uplink signal, and sending, via the first branch, the fifth uplink signal to the preceding adjacent sub-node through the physical transmission medium.

Based on the method 500, the present disclosure further presents three embodiments. Correspondingly, there are three specific schematic structural diagrams for the PHY device 100 in FIG. 4, namely the above FIGS. 7, 8, and 8. It should be understood that the PHY device in the method 200 and that in the method 500 have a same specific structure, the method 200 is applied to the downlink signal transmission, and the method 500 is applied to uplink signal transmission.

### Embodiment 1

FIG. 7 is a specific schematic structural diagram of the PHY device. As shown in FIG. 7, the first branch 310 comprises a first MDI module 311, a first PMA module 312, and a first PCS module 313. Correspondingly, the second branch 320 comprises a second MDI module 321, a second PMA module 322, and a second PCS module 323.

During the uplink signal transmission, in the S510 and the S520, the second branch 320 first receives the first uplink signal through the physical transmission medium and processes the first uplink signal to obtain the second uplink signal. Specifically, the second MDI module 321 is configured to connect the PHY device 300 to the physical transmission medium, thereby connecting the nodes including the head node and the sub-nodes through the physical transmission medium. The second MDI module 321 receives the first uplink signal transmitted by the succeeding adjacent sub-node through the physical transmission medium. In addition, the second MDI module 321 not only can receive the first uplink signal transmitted through the physical transmission medium, but also can perform some additional operations such as current driving and voltage adjustment for the physical transmission medium, to ensure that the first uplink signal can be accurately transmitted to the PHY device.

The second PMA module 322 receives the first uplink signal transmitted from the second MDI module 321, and during the uplink signal transmission, the second PMA module 322 is configured to perform signal processing such as demodulation on the first uplink signal to convert the first uplink signal into a digital signal processable by the second PCS module 323. In addition, during the audio data transmission, the second PMA module 322 can further recover PMA token of the received signal processed by the second MDI module 321 by ECHO elimination and equalization algorithm, and then send the signal to the second PCS module 323, so as to improve the audio quality.

The second PCS module 323 receives the processed digital signal from the second PMA module 322, descrambles the signal to obtain the second uplink signal, wherein the second uplink signal is 3-bit data, and forwards the second uplink signal to the first branch 310 through the forwarding module 340.

In the S520, the first branch 310 receives the second uplink signal and then performs signal processing on the second uplink signal to obtain the first uplink signal. That is to say, the signal processing operation performed by the first branch 310 is equivalent to a reverse process of the signal processing performed by the second branch 320.

Specifically, after receiving the second uplink signal through the forwarding module 340, the first PCS module 313 in the first branch 310 scrambles the second uplink signal, and sends the scrambled second uplink signal to the first PMA module 312.

The first PMA module 312 receives the digital signal processed by the first PCS module 313, and modulates the digital signal to convert it into an analog signal transmittable in the first MDI module 311. That is to say, the first PMA module 312 converts the received data into data mappable to the physical transmission medium, to adapt to transmission features of the physical transmission medium and convert the data into an analog signal adapted to transmission on the physical transmission medium.

In the S530, the first MDI module 311 in the first branch 310 receives the analog signal processed by the first PMA module 312, and transmits the analog signal to the preceding adjacent sub-node or the head node through the physical transmission medium.

It should be understood that in the S200 and the S500, during the downlink signal transmission, the signal is transmitted from the first branch 310 to the forwarding module 340, then to the second branch 320, and then to the succeeding adjacent node, while during the uplink signal transmission, the signal is transmitted from the second branch 320 to the forwarding module 340, then to the first branch 310, and then to the preceding adjacent node or the head node. That is to say, the signal processing performed by the modules in the first branch 310 in the S200 is equivalent to the signal processing performed by the modules in the second branch 320 in the S500, and the signal processing performed by the modules in the second branch 320 in the S200 is equivalent to the signal processing performed by the modules in the first branch 310 in the S500.

In the S540 and the S550, the physical layer device further comprises a third branch 330, the third branch 330 comprises a first interface 333, and the third branch 330 receives the third uplink signal transmitted by the transmission processing device through the first interface 333 and processes the third uplink signal, to obtain the fourth uplink signal; the first branch 310 receives the fourth uplink signal through the forwarding module 340 and processes the fourth uplink signal to obtain a fifth uplink signal, and the first branch 310 sends the fifth uplink signal to the preceding adjacent sub-node through the physical transmission medium.

Specifically, in FIG. 7, the third branch 330 comprises a cache module and a third PCS module 332, and the third branch 330 comprises a first interface 333, a third PCS module 332, and a first cache module 331.

The third branch 330 receives the third uplink signal transmitted by the transmission processing device through a third interface, and specifically receives the third uplink signal through the third PCS module 332. The third uplink signal is 4-bit data, and the 4-bit data needs to be converted into 3-bit data through the third PCS module 332 before it can be further transmitted to the forwarding module 340 and then to the first PCS module 313. Therefore, as shown by the relevant description of the S240, between the first PCS module 313 and the third PCS module 332, there is a conversion between different clock domains. The first cache module 331 is required to provide intermediate storage between different clock domains, that is, to temporarily store data, so as to send data at different clock frequencies, and process rate difference between the clock domains, thereby ensuring correct transmission of data.

The first PCS module 313 receives the third uplink signal transmitted by the third PCS module 332 and cached by the first cache module 331, and converts the third uplink signal into 3-bit data, that is, the fourth uplink signal. The first PCS module 313 then sends the fourth uplink signal to the first PMA module 312.

The first PMA module 312 receives the fourth uplink signal transmitted by the first PCS module 313, and modulates the fourth uplink signal to convert it into an analog signal transmittable in the first MDI module 311, i.e., processes the fourth uplink signal to obtain the fifth uplink signal. That is to say, the first PMA module 312 converts the received data into data mappable to the physical transmission medium, to adapt to transmission features of the physical transmission medium and convert the data into an analog signal adapted to transmission on the physical transmission medium.

In the S550, the first MDI module 311 in the first branch 310 receives the fifth uplink signal transmitted by the first PMA module 312, and then the first MDI module 311 transmits the fifth uplink signal to the preceding adjacent sub-node or the head node through the physical transmission medium.

Or, the second PCS module 323 receives the third uplink signal transmitted by the third PCS module 332 and cached by the first cache module 331, and converts the third uplink signal into 3-bit data, that is, the fourth uplink signal, and then transmits the above fifth uplink signal to the succeeding adjacent sub-node through the physical transmission medium after transmission through the second PMD module and the second MDI module 321. That is to say, the third uplink signal can be transmitted to the first branch 310 or the second branch 320 through the forwarding module 340, and the first branch 310 and the second branch 320 perform same processing on the third uplink signal, which is finally transmitted to the preceding adjacent sub-node or the head node through the first MDI module 311, or transmitted to the succeeding adjacent sub-node through the second MDI module 321.

Therefore, with the method 500, the fifth uplink signal can be transmitted to the head node. That is to say, each sub-node will process the third uplink signal generated by its transmission processing device with the method 500 to obtain the fifth uplink signal, and transmit the fifth uplink signal to the head node, so that the head node receives the fifth uplink signal from each sub-node, which is convenient for the head node to collect and further process the fifth uplink signal from each sub-node. For example, during the audio data transmission, the sub-nodes are audio players, collect a call signal or noise signal from an external environment, process the call signal or noise signal with the method 500, and then send it to the head node. The head node collects the call signal from each sub-node, and can perform echo cancellation and noise control, to improve the call quality and enhance the user experience.

In addition, with the method 500, the fifth uplink signal can also be transmitted to the succeeding adjacent sub-node, which is convenient for further processing by the succeeding adjacent sub-node. For example, during the audio data transmission, the sub-nodes are audio players. A current sub-node collects an external noise signal, processes the noise signal with the method 500, and then sends it to the succeeding adjacent sub-node. The succeeding adjacent sub-node collects the noise signal from the current sub-node and performs noise control, to improve the audio quality.

In addition, in the specific structure of the PHY device shown in FIG. 7, the forwarding module 340 is arranged between the first PCS module 313 of the first branch 310 and the second PCS module 323 of the second branch 320, and arranged between the first PCS module 313 of the first branch 310 and the first cache module 331 of the third branch 330, so that there is a short forwarding delay, which is conducive to data synchronization among the sub-nodes.

### Embodiment 2

FIG. 8 is a second specific schematic structural diagram of a PHY device. Optionally, the forwarding module 340 may also be configured as the specific structure of the PHY device shown in FIG. 8. In the method 500, what is different from the embodiment 1 shown in FIG. 7 is that the second branch 320 in FIG. 7 obtains the second uplink signal after processing by the second MDI module 321, the second PMA module 322, and the second PCS module 323, while the second branch 320321 in FIG. 8 obtains the second uplink signal through the second MDI module and the second PMA module 322.

In FIG. 8, the first branch 310 receives the second uplink signal and performs signal processing to obtain the first uplink signal, and the signal processing operation performed by the first branch is equivalent to a reverse process of the signal processing performed by the second branch 320. The third branch 330 receives the third uplink signal transmitted by the transmission processing device and performs signal processing to obtain the fourth uplink signal, and transmits the fourth uplink signal to the first branch through the forwarding module 340. The first branch then processes the fourth uplink signal to obtain the fifth uplink signal and sends the fifth uplink signal to the preceding adjacent sub-node or the head node through the physical transmission medium.

It should be understood that during the uplink signal transmission, the signal processing operations performed by the modules of the third branch 330 to the first branch 310 in FIG. 8 are same as the signal processing operations performed by the modules of the third branch 330 to first the branch 310 in FIG. 7, and the relevant description in FIG. 7 may be referred to. For the sake of brevity, no further details will be given here. The first branch in FIG. 8 is equivalent to the reverse process of signal processing performed by the second branch, and will not be repeated here for the sake of brevity.

### Embodiment 3

FIG. 9 is a third specific schematic structural diagram of a PHY device. Optionally, the forwarding module 340 may also be configured as the specific structure of the PHY device shown in FIG. 9. In the method 500, what is different from the embodiment 1 shown in FIG. 9 is that the second branch 320 in FIG. 7 obtains the second uplink signal after processing by the second MDI module 321, the second PMA module 322, and the second PCS module 323, while the second branch 320 in FIG. 8 obtains the second uplink signal through the second MDI module 321, the second PMA module 322, the second PCS module 323, the first cache module 324, and the third PCS module 325.

In FIG. 9, the first branch 310 receives the second uplink signal and performs signal processing to obtain the first uplink signal, and the signal processing operation performed by the first branch 310 is equivalent to a reverse process of the signal processing performed by the second branch 320. The third branch 330 receives the third uplink signal transmitted by the transmission processing device and performs signal processing to obtain the fourth uplink signal, and transmits the fourth uplink signal to the first branch 310 through the forwarding module 340. The first branch 310 then processes the fourth uplink signal to obtain the fifth uplink signal and sends the fifth uplink signal to the preceding adjacent sub-node or the head node through the physical transmission medium.

It should be understood that during the uplink signal transmission, the signal processing operations performed by the modules of the third branch 330 to the first branch 310 in FIG. 9 are same as the signal processing operations performed by the modules of the third branch 330 to first the branch 310 in FIG. 7, and the relevant description in FIG. 7 may be referred to. For the sake of brevity, no further details will be given here. The first branch 310 in FIG. 9 is equivalent to the reverse process of signal processing performed by the second branch 320, and will not be repeated here for the sake of brevity.

Therefore, with the method 500, each sub-node in the network structure shown in FIG. 1 or FIG. 2 can support the forwarding function, thereby sending, e.g., data from each sub-node upward to the head node, which is convenient for further processing, such as echo cancellation and noise control, by the head node, or transmitting data from the sub-node to another sub-node in the uplink direction, which is convenient for data processing, such as noise control, by the other sub-node. The method 500 can implement network data transmission with a high transmission rate, a high bandwidth, and a high precision, thereby reducing the delay in data forwarding by sub-nodes, and contributing to data synchronization among sub-nodes.

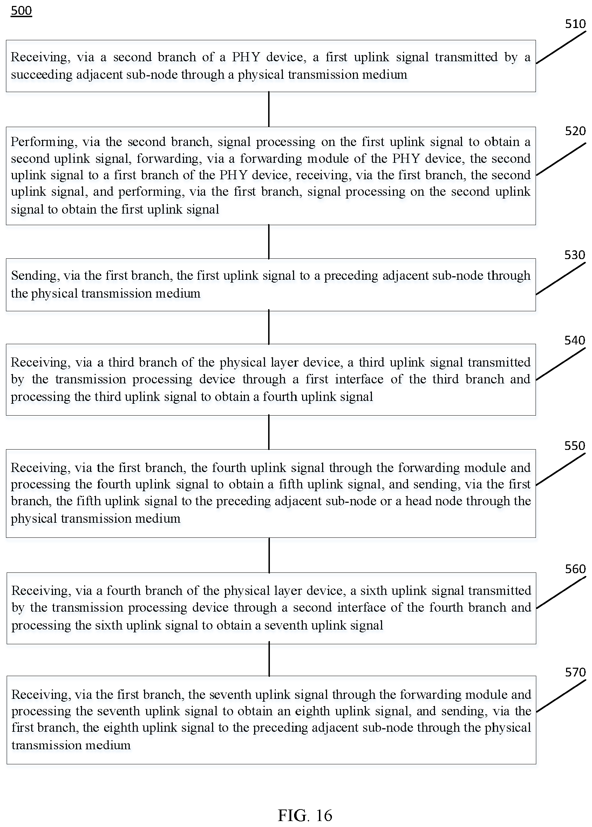

On the basis of the S540 and the S550, further, as shown in FIG. 16, the method 500 further comprises S560 and S570:
S560: receiving, via a fourth branch of the physical layer device, a sixth uplink signal transmitted by the transmission processing device through a second interface of the fourth branch and processing the sixth uplink signal to obtain a seventh uplink signal.
S570: receiving, via the first branch, the seventh uplink signal through the forwarding module and processing the seventh uplink signal to obtain an eighth uplink signal, and sending, via the first branch, the eighth uplink signal to the preceding adjacent sub-node through the physical transmission medium.

When a large volume of signals are generated by the transmission processing device or the transmission processing device comprises a plurality of input/output devices to generate a plurality of signals, the fourth branch can be used to share the transmission of a portion of the signals with the same processing and operations as the third branch in the S540 and the S550. Specifically, for example, the transmission processing device comprises two input/output devices, thereby generating the third uplink signal and the sixth uplink signal respectively, the third branch receives the third uplink signal and implements the S540 and the S550, and the fourth branch receives the sixth uplink signal and implements the S560 and the S570, wherein signal operations and processing in the S540 and the S550 are same as those in the S560 and the S570.

Specifically, based on the method 500 comprising the S560 and the S570 shown in FIG. 16, the present disclosure provides three embodiments respectively with reference to the specific structures of the PHY devices shown in FIGS. 11, 12, and 13. As shown in FIG. 11, in the embodiment 1, the fourth branch 350 comprises the second cache module 351, the fourth PCS module 352, and the second interface 353. The above S540 to S550 in the embodiment 1 may be referred to for specific operations. For the sake of brevity, no further details will be given here. As shown in FIG. 12, in the embodiment 2, the fourth branch 350 comprises the second PCS module 351, the second cache module 352, the fourth PCS module 353, and the second interface 354. The above S540 to S550 in the embodiment 2 may be referred to for specific operations. For the sake of brevity, no further details will be given here. In the embodiment 3 as shown in FIG. 13, the fourth branch 350 comprises the second interface 351. The above S540 to S550 in the embodiment 3 may be referred to for specific operations. For the sake of brevity, no further details will be given here.

Through the S560 and the S570, the plurality of signals and the large volume of signals generated by the transmission processing device can be transmitted simultaneously, thereby improving the signal transmission bandwidth and signal transmission efficiency, and satisfying a more complex transmission scenario.

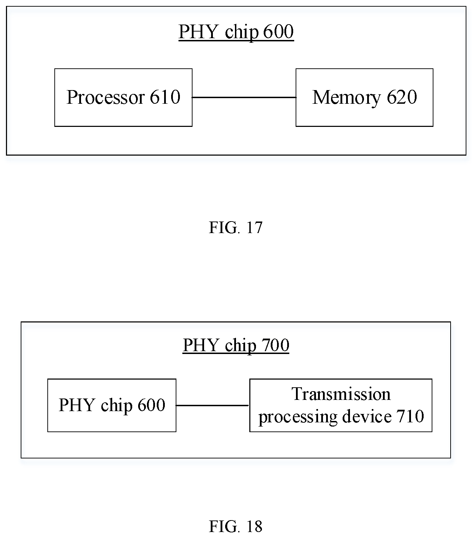

An embodiment of the present disclosure further provides a PHY chip 600. As shown in FIG. 17, the PHY chip 600 comprises a processor 610 and a memory 620, wherein the memory 620 is configured to store a computer program, and the processor 610 is configured to invoke and run the computer program stored in the memory 620, to implement the corresponding operations and processes implemented by the PHY devices in the methods 200 and 500 of the embodiments of the present disclosure. For the sake of brevity, no further details will be given here.

An embodiment of the present disclosure further provides an electronic device 700. As shown in FIG. 17, the electronic device 700 comprises the PHY chip 600 shown in FIG. 17 and a transmission processing device 710. The electronic device 700 is a sub-node in the methods 200 and 500. The transmission processing device 710 is connected to the PHY chip 600, for interaction with an external environment. That is, the transmission processing device 710 implements the corresponding operations and processes implemented by the transmission processing device in the methods 200 and 500 of the embodiments of the present disclosure. For the sake of brevity, no further details will be given here.

In an implementation process, steps of the above method embodiments may be completed by an integrated logic circuit of hardware in the processor or an instruction in the form of software. The above processor may be a general-purpose processor, a digital signal processor (DSP), an application specific integrated circuit (ASIC), a field programmable gate array (FPGA) or other programmable logic devices, a discrete gate or transistor logic device, or a discrete hardware component, and can implement or execute the methods, steps, and logical block diagrams disclosed in the embodiments of the present disclosure. The general-purpose processor may be a microprocessor or the processor may be any conventional processor or the like. The steps of the method disclosed in the embodiments of the present disclosure may be directly embodied as being executed and completed by a hardware decoding processor, or being executed and completed by a combination of hardware and software modules in the decoding processor. The software module may be located in a mature storage medium in the art, such as a random access memory, a flash memory, a read-only memory, a programmable read-only memory or an electrically erasable programmable memory, or a register. The storage medium is located in the memory. The processor reads information in the memory, and completes the steps of the above method in combination with its hardware.

The above memory may be a volatile memory or a non-volatile memory, or may include both a volatile memory and a non-volatile memory. The non-volatile memory may be a read-only memory (ROM), a programmable read-only memory (PROM), an erasable programmable read-only memory (Erasable PROM, EPROM), an electrically erasable programmable read-only memory (Electrically EPROM, EEPROM), or a flash memory. The volatile memory may be a random access memory (RAM), which is used as an external cache. In an exemplary manner, instead of a limiting manner, many forms of RAM are usable, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). As will be appreciated by those of ordinary skills in the art, the example units and algorithm steps described with reference to the embodiments disclosed herein can be implemented by electronic hardware, or by a combination of computer software and electronic hardware. Whether these functions are executed by hardware or software depends on particular applications and design constraints of the technical solutions. Those skilled in the art may implement described functions for each particular application using different methods, but such implementation should not be considered as falling beyond the scope of the present disclosure.

The "connection" in the embodiments of the present disclosure includes, but is not limited to, various connection modes such as communication connection and electrical connection. For example, the forwarding module connects the first branch to the second branch, indicating that there is a communicative connection among the first branch, the forwarding module, and the second branch, thereby transmitting signals.

The specific examples in the embodiments of the present disclosure are provided only to help those skilled in the art to better understand the embodiments of the present disclosure, rather than limiting the scope of the embodiments of the present disclosure. Those skilled in the art may make various improvements and modifications on the basis of the above embodiments, and these improvements or modifications are all encompassed within the scope of protection of the present disclosure.

While the above description merely provides specific embodiments of the present disclosure, the scope of protection of the present disclosure is not limited to the specific embodiments. Any person skilled in the art can easily conceive of alterations or replacements within the technical scope disclosed in the present disclosure. All these alterations or replacements should be encompassed within the scope of protection of the present disclosure. Therefore, the scope of protection of the present disclosure should be determined by the scope of protection of the claims.

## Claims

1. A data forwarding method for a physical layer device of a sub node in a transmission network, wherein the network comprises a head node and a plurality of sub-nodes, the head node and the plurality of sub-nodes are connected via a physical transmission medium, and the sub-node further comprises transmission processing device, the data forwarding method comprises:
receiving, via a first branch of the physical layer device, a first downlink signal transmitted by the head node or a preceding adjacent sub-node among the plurality of sub-nodes through the physical transmission medium;
enabling, via the first branch, a second branch of the physical layer device to obtain the first downlink signal through a forwarding module of the physical layer device; and
sending, via the second branch, the first downlink signal to a succeeding adjacent sub-node among the plurality of sub-nodes through the physical transmission medium.

2. The method according to claim 1, wherein the enabling, via the first branch, the second branch to obtain the first downlink signal through the forwarding module comprises:
performing, via the first branch, signal processing on the first downlink signal to obtain a second downlink signal, forwarding, via the forwarding module, the second downlink signal to the second branch, receiving, via the second branch, the second downlink signal, and performing, via the second branch, signal processing on the second downlink signal to obtain the first downlink signal.

3. The method according to claim 2, wherein the method further comprises:
receiving, via a third branch of the physical layer device, the second downlink signal through the forwarding module, processing the second downlink signal to obtain a third downlink signal, and then sending the third downlink signal to the transmission processing device through a first interface of the third branch.

4. The method according to claim 2, wherein the first branch comprises a first PCS module, the second branch comprises a second PCS module, the forwarding module connects the first PCS module to the second PCS module, the first PCS module is configured to descramble a signal, and the second PCS module is configured to scramble a signal.

5. The method according to claim 2, wherein the first branch comprises a first PMA module, the second branch comprises a second PMA module, the forwarding module connects the first PMA module to the second PMA module, the first PMA module is configured to demodulate a signal, and the second PMA module is configured to modulate a signal.

6. The method according to claim 2, wherein the first branch comprises a third PCS module, the second branch comprises a fourth PCS module, the forwarding module connects the third PCS module to the fourth PCS module, and the third PCS module and the fourth PCS module are configured to implement data adaptation.

7. The method according to claim 2, wherein the method further comprises:
jointly receiving, via a third branch and a fourth branch of the physical layer device, the second downlink signal through the forwarding module and processing the second downlink signal to obtain a fourth downlink signal and a fifth downlink signal respectively, sending, via the third branch, the fourth downlink signal to the transmission processing device through a first interface of the third branch, and sending, via the fourth branch, the fifth downlink signal to the transmission processing device through a second interface of the fourth branch.

8. The method according to claim 1, wherein the method further comprises:
receiving, via the second branch, a first uplink signal transmitted by the succeeding adjacent sub-node through the physical transmission medium;
enabling, via the second branch, the first branch to obtain the first uplink signal through the forwarding module; and
sending, via the first branch, the first uplink signal to the preceding adjacent sub-node or the head node through the physical transmission medium.

9. The method according to claim 8, wherein the enabling, via the second branch, the first branch to obtain the first uplink signal through the forwarding module comprises:
performing, via the second branch, signal processing on the first uplink signal to obtain a second uplink signal, forwarding, via the forwarding module, the second uplink signal to the first branch, receiving, via the first branch, the second uplink signal, and performing, via the first branch, signal processing on the second uplink signal to obtain the first uplink signal.

10. The method according to claim 9, wherein the method further comprises:
receiving, via a third branch of the physical layer device, a third uplink signal transmitted by the transmission processing device through a first interface of the third branch and processing the third uplink signal to obtain a fourth uplink signal;
receiving, via the first branch, the fourth uplink signal through the forwarding module and processing the fourth uplink signal to obtain a fifth uplink signal, and sending, via the first branch, the fifth uplink signal to the preceding adjacent sub-node or the head node through the physical transmission medium.

11. The method according to claim 9, wherein the second branch comprises a second PCS module, the first branch comprises a first PCS module, the forwarding module connects the first PCS module to the second PCS module, the second PCS module is configured to descramble a signal, and the first PCS module is configured to scramble a signal.

12. The method according to claim 9, wherein the second branch comprises a second PMA module, the first branch comprises a first PMA module, the forwarding module connects the first PMA module to the second PMA module, the second PMA module is configured to demodulate a signal, and the first PMA module is configured to modulate a signal.

13. The method according to claim 9, wherein the second branch comprises a fourth PCS module, the first branch comprises a third PCS module, the forwarding module connects the third PCS module to the fourth PCS module, and the third PCS module and the fourth PCS module are configured to implement data adaptation.

14. A physical layer chip, comprising:
a processor and a memory, wherein the memory is configured to store a computer program, and the processor is configured to invoke and run the computer program stored in the memory, to implement the method according to any one of claims 1-13.

15. An electronic device, comprising:
the physical layer chip according to claim 14 and a transmission processing device, wherein the transmission processing device is connected to the physical layer chip, for interaction with an external environment.
